# EUROPÄISCHE PATENTSCHRIFT

(11) **EP 3 703 183 B1**
(45) Veröffentlichungstag und Bekanntmachung des Hinweises auf die Patenterteilung: **15.09.2021**
(21) Anmeldenummer: 20154315.4
(22) Anmeldetag: 29.01.2020
(51) Int. Cl.: H01Q 1/08, B64G 1/22, B64G 1/64

(54) **VORRICHTUNG ZUM UMSETZEN EINES ELEKTRISCHEN SIGNALS IN EINE MECHANISCHE BEWEGUNG**
DEVICE FOR CONVERTING AN ELECTRICAL SIGNAL INTO A MECHANICAL MOVEMENT
DISPOSITIF DE CONVERSION D'UN SIGNAL ÉLECTRIQUE EN UN MOUVEMENT MÉCANIQUE

(30) Priorität: 19.02.2019 AT 501222019
(43) Veröffentlichungstag der Anmeldung: 02.09.2020
(73) Patentinhaber: Space-Lock GmbH, 2345 Brunn am Gebirge (AT)
(72) Erfinder: Günther, Florian, 2340 Mödling (AT); Uhl, Andreas, 1230 Wien (AT)
(74) Vertreter: Hübscher & Partner Patentanwälte GmbH

(56) Entgegenhaltungen:
- CN-A- 107 689 476
- US-A1- 2010 089 189
- US-A1- 2012 293 294

## Beschreibung

Die Erfindung bezieht sich auf eine Vorrichtung zum Umsetzen eines elektrischen Signals in eine mechanische Bewegung, insbesondere zum Auslösen einer große Kräfte zurückhaltenden Auslösevorrichtung, umfassend wenigstens eine in einem Grundkörper angeordnete und einen Schmelzdraht klemmend greifende Kontaktiervorrichtung, wobei ein Sicherungsbolzen durch den Schmelzdraht in einer Sicherungsposition fixiert ist.

In der Raumfahrt ist es regelmäßig nötig große Kräfte kommandiert freizugeben. So kann sichergestellt werden, dass beispielsweise Satelliten, Sonden, Antennen oder sonstige in der Raumfahrt eingesetzte Systeme, die auf Grund der hohen Lasten beim Atmosphärenaustritt durch hochfeste Verbindungen an ihrer Antriebsvorrichtung fixiert sind, ordnungsgemäß von dieser im Weltall nicht mehr benötigten Antriebsvorrichtung abgekoppelt werden können.

Aus der US20100089189A1 ist hierzu eine einen segmentierten Zylinder aufweisenden Auslösevorrichtung bekannt, die ein abzukoppelndes Element an einem Angriffspunkt greifend zurückhaltet. Die den Angriffspunkt umschließenden Zylindersegmente werden dabei von einer Wickelung gegen ein Auseinanderlösen und damit vor einem Abkoppeln des abzukoppelnden Elementes gesichert. Die Wickelung selbst wird beispielsweise von einem Schmelzdraht oder von einem schmelzdrahtgesicherten Hebel unter Vorspannung fixiert. Soll ein kommandiertes Abkoppeln des abzukoppelnden Elementes induziert werden, führt ein definierter Stromimpuls zum Aufschmelzen des Schmelzdrahtes, wodurch die Wickelung direkt oder über eine externe Hebelvorrichtung freigegeben wird und sich auf Grund ihrer Eigenspannung erweitert. In Folge dessen können sich die Zylindersegmente voneinander ablösen, wodurch das abzukoppelnde Element freigegeben wird. Nachteilig an der vorbekannten Lösung ist allerdings die Tatsache, dass der Assemblierungsvorgang der die Wickelung unter Vorspannung fixierenden Vorrichtung auf Grund der großen Anzahl an unterschiedlichen Komponenten sehr aufwändig ist und dass die Vorrichtung zum Freigeben der Wickelung an nur jeweils mit einer speziellen Ausführung der Auslösevorrichtung zusammenwirken kann.

Die US9085377B2 offenbart ebenfalls eine mehrere Segmente eines Zylinders aufweisende Vorrichtung zur Sicherung eines abzukoppelnden Elementes, wobei die Zylindersegmente von einer Wickelung gegen ein Auseinanderlösen gesichert sind. Die Wickelung wird von einer kompakten einen Hebel aufweisenden Vorrichtung unter Vorspannung fixiert, wobei der Hebel durch einen Schmelzdraht in einer Haltestellung festgehalten wird. Durch einen eingeleiteten Stromimpuls schmilzt der Schmelzdraht auf und der Hebel verlagert sich von seiner Haltestellung in eine Lösestellung, wodurch die auf die Wickelung wirkende Vorspannung gelöst wird, und das abzukoppelnde Element nach Auseinanderlösen der Zylindersegmente freigegeben wird. Auch bei dieser vorbekannten Vorrichtung erweist sich der Zusammenbau als recht komplex, so muss der Schmelzdraht zur Fixierung des Hebels in seiner Haltestellung einem definierten Wickelungsschema entsprechen um eine gezielte, kommandierte Freigabe von großen Kräften zu ermöglichen. Zudem ist der Schmelzdraht samt Kontaktierung unmittelbar der Atmosphäre ausgesetzt, was vor allem bei korrosiven Umweltbedingungen zu einem funktionsuntüchtigen Auslösemechanismus führen kann.

Zum Schutz des Schmelzdrahtes vor umweltbedingten Einflüssen und zum sicheren Kontaktieren desselben mit einem externen Stromkreis ist es aus der US5621373 bekannt, einen Schmelzdraht in metallischen Schutzröhren anzuordnen. Hier erfordert das zeitintensive Einfädeln des Schmelzdrahtes in die dafür vorgesehenen Schutzröhren eine hohe Geschicklichkeit. Die CN107689476A offenbart ebenfalls eine Vorrichtung zur Sicherung eines abzukoppelnden Elementes.

Der Erfindung liegt somit die Aufgabe zugrunde, eine Vorrichtung zum Umsetzen eines elektrischen Signals in eine mechanische Bewegung, insbesondere zum Auslösen einer große Kräfte zurückhaltenden Auslösevorrichtung, vorzuschlagen, die trotz eines einfachen, kompakten Auf- und Zusammenbaus sicher betätigt werden kann, auch wenn diese über einen langen Zeitraum extremen Umwelteinflüssen ausgesetzt worden ist.

Die Erfindung löst die gestellte Aufgabe dadurch, dass die auf den Schmelzdraht ausgeübte Klemmkraft der Kontaktiervorrichtung über eine den Grundkörper wenigstens teilweise umgreifende Klemme justierbar ist.

Die erfindungsgemäße Vorrichtung weist einen Grundkörper auf, der eine Aufnahme für wenigstens eine Kontaktiervorrichtung ausbildet. Die Kontaktiervorrichtung greift dabei ein Ende eines Schmelzdrahtes, beispielsweise aus kaltgezogenem Edelstahl, und verbindet diesen mit einem extern ansteuerbaren Stromkreis. Das zweite Ende des Schmelzdrahtes kann in der einfachsten Ausführungsform stoffschlüssig mit dem Stromkreis verbunden sein, oder aber, wie in den abhängigen Ansprüchen ausgeführt, analog zum ersten Ende kontaktiert sein. Ein unisolierter, nicht von der Kontaktiervorrichtung geklemmter Mittelteil des Schmelzdrahtes bildet dabei eine Schlinge, die einen Sicherungsbolzen in einer Sicherungsposition festhält. Um einen ausreichend robusten Sitz zu ermöglichen, wird ein Ende des Sicherungsbolzens durch den Grundkörper lösbar fixiert und das zweite Ende durch die Schlinge des Schmelzdrahtes geführt, sodass der mit einer aus dem Stand der Technik bekannten Auslösevorrichtung beispielsweise zugfest verbundene Sicherungsbolzen in seiner Sicherungsposition fixiert ist. Soll die Vorrichtung beispielsweise in Verbindung mit einer aus dem Stand der Technik bekannten, mehrere Segmente eines Zylinders aufweisenden Vorrichtung zur Sicherung eines abzukoppelnden Elementes eingesetzt werden, kann der Sicherungsbolzen eine die Zylindersegmente sichernde Wickelung unter Vorspannung fixieren. Wird nun durch den externen Stromkreis ein Stromimpuls in den Schmelzdraht eingeleitet, so schmilzt dieser auf, wodurch der Sicherungsbolzen nicht mehr in seiner Sicherungsposition festgehalten wird und dadurch nicht mehr der Vorspannung entgegenwirkt. Zu Folge dieser Schritte erweitert sich die Wickelung der aus dem Stand der Technik bekannten Vorrichtung, wodurch das von den Zylindersegmenten zurückgehaltene zu entkoppelnde Element freigegeben wird. Naturgemäß können auch andere aus dem Stand der Technik bekannte Auslösevorrichtung durch die erfindungsgemäße Vorrichtung aktiviert werden. Da der Schmelzdraht in der oder beim Verlassen der Atmosphäre extremen Umwelteinflüssen ausgesetzt ist, muss ein Schutz des Schmelzdrahtes zu jedem Zeitpunkt gewährleistet sein. Dies geschieht erfindungsgemäß dadurch, dass der von der im Grundkörper angeordneten Kontaktiervorrichtung geklemmte Schmelzdraht eine zusätzliche Klemmung durch eine den Grundkörper umgreifenden Klemme erfährt. Dadurch kann eine engewiderstandsarme Verbindung zwischen der zum Grundkörper hin isolierten Kontaktiervorrichtung und dem Schmelzdraht erzielt werden, und gleichzeitig ein Großteil des unisolierten Schmelzdrahtes vor direktem Kontakt mit Korrosionsmedien geschützt werden. Auf Grund der sich verjüngenden Ausgestaltung des von den Klemmzungen der Klemme umspannten Klemmraums zum Klemmursprung hin, kann die Klemmkraft durch unterschiedliche Positionierung der Klemme am Grundkörper variiert werden. Dabei umschließt die Klemme zusätzlich den Sicherungsbolzen, wodurch auch dieser vor äußeren, eventuell bei einem Startvorgang einwirkenden Kräfte und vor unabsichtlicher Betätigung geschützt wird. Um trotz der unterschiedlichen Schutzmechanismen einen sehr einfachen Zusammenbau der erfindungsgemäßen Vorrichtung zu gewährleisten, bildet der Grundkörper eine Aufnahme für die wenigstens eine lösbare Kontaktiervorrichtung aus. Dadurch kann die Verbindung der Kontaktierungsvorrichtung mit dem Schmelzdraht außerhalb des Grundkörpers durchgeführt werden, wonach die Kontaktiervorrichtung in die Aufnahme eingeführt und der Sicherungsbolzen durch die vom Schmelzdraht geformte Schlinge geführt wird. Abschließend wird der Sicherungsbolzen mit einer aus der dem Stand der Technik bekannten Auslösevorrichtung beispielsweise über ein quer zur Klemme verlaufendes Zugmittel verbunden. Alternativ dazu kann eine Auslösevorrichtung auch über einen Hebel durch die erfindungsgemäße Vorrichtung ausgelöst werden. In diesem Fall hält der Sicherungsbolzen in seiner Sicherungsposition den beispielsweise eine Wickelung einer aus dem Stand der Technik bekannten Auslösevorrichtung unter Vorspannung fixierenden Hebel in einer Haltestellung fest. Beim Aufschmelzen des Schmelzdrahtes verlässt der Sicherungsbolzen seine Sicherungsposition, wodurch besagter Hebel in eine Lösestellung, in der die Wickelung nicht mehr unter Vorspannung fixiert wird, übergeht. Als Folge dessen erweitert sich die Wickelung und gibt das abzukoppelnde Element frei.

Damit die Vorrichtung auch großen Kräften entgegenwirken kann, ohne dass der konstruktive Aufwand beim Zusammenbau erhöht wird, kann ein im Grundkörper schwenkbar gelagerter Hebel mittels eines durch den Schmelzdraht gesicherten Sicherungsbolzens in einer Haltestellung fixierbar sein. Der Hebel kann dabei so im Grundkörper angeordnet sein, dass er in seiner Haltestellung zwischen Sicherungsbolzen und Grundkörper fixiert ist. Zu Folge dieser Maßnahmen umschließt die Klemme auch den Hebel, wodurch ein unerwünschtes Betätigen des Hebels verhindert werden kann. Analog zur Ausführungsform ohne integriertem Hebel führt ein Stromimpuls zum Aufschmelzen des Schmelzdrahtes, wonach der den Hebel in seiner Haltestellung fixierende Sicherungsbolzen seine Sicherungsposition verlässt. Dadurch wird wiederum eine Verlagerung des Hebels in eine Lösestellung ermöglicht. Bei entsprechendem Last- zu Kraftarmverhältnis des Hebels können auf diese Weise wesentlich höhere Kräfte aufgenommen werden, als bei einem Auslösen durch den Sicherungsbolzen alleine. Für eine erleichterte Anordnung des Sicherungsbolzens, kann der Hebel eine an den Sicherungsbolzen angepasste Ausformung ausbilden.

Um den Aufschmelzbereich des Schmelzdrahtes auf den Schlingenbereich einzuschränken, wird vorgeschlagen, dass die Kontaktiervorrichtung zwei aus dem Grundkörper lösbare Kontaktlaschen ausbildet, die jeweils ein Ende des Schmelzdrahtes klemmen, wobei der Schmelzdraht den Sicherungsbolzen an einem seiner Endabschnitte umschlingt. Auf diese Weise kann die komplette Kontaktierung des Schmelzdrahtes außerhalb des Grundkörpers durchgeführt werden, wodurch sich ein besonders einfacher Assemblierungsvorgang ergibt. In diesem Fall kann der Grundkörper zwei Aufnahmen ausbilden, sodass die Kontaktlaschen unabhängig voneinander aus und in den Grundkörper geführt werden können.

Vor allem bei Weltraumanwendungen ist ein redundant gesichertes Auslösen diverser Vorrichtungen gewünscht. Damit also euch ein sicheres Auslösen bei einem Ausfall eines Stromkreises möglich ist, empfiehlt es sich, dass die Kontaktiervorrichtung zwei aus dem Grundkörper lösbare, je zwei Kontaktlaschen aufweisende, Kontaktlaschenpaare ausbildet, wobei die Kontaktlaschen eines ersten Kontaktlaschenpaares jeweils ein Ende eines einen ersten Endabschnitt des Sicherungsbolzens umschlingenden Schmelzdrahtes klemmen, und die Kontaktlaschen eines zweiten Kontaktlaschenpaares jeweils ein Ende eines einen zweiten Endabschnitt des Sicherungsbolzens umschlingenden Schmelzdrahtes klemmen. Zu Folge dieser Maßnahmen wird der Sicherungsbolzen ausschließlich von zwei Schmelzdrähten in seiner Sicherungsposition fixiert. Da die Schmelzdrähte über jeweils zwei Kontaktlaschen mit zweit separaten Stromkreisen verbunden sind, kann auch nach Ausfall eines Stromkreises, oder bei einer funktionsuntüchtig gewordenen Kontaktierung, das noch funktionstüchtige Systems einen Stromfluss in den zugeordneten Schmelzdraht einleiten, wodurch der Sicherungsbolzen aus seiner Sicherungsposition gebracht werden kann und der Hebel von der Haltestellung in die Lösestellung wechselnd die Auslösevorrichtung aktiviert.

Damit eine formschlüssige Kontaktierung von unterschiedlich ausgestalteten Schmelzdrähten ermöglicht wird, kann die durch die Klemme auf den Schmelzdraht ausgeübte Klemmkraft durch eine die gegenüberliegenden Klemmzungen zueinander verlagernde und miteinander verbindende Gewindeschraube verstellbar sein. Dies führt zum Vorteil, dass die Klemmkraft der Klemme unabhängig von ihrer Eigenspannung verändert und durch definierte Drehmomentvorgaben der Gewindeschraube eingestellt werden kann.

Um eine galvanische Verbindung zwischen Kontaktiervorrichtung und Klemme zu verhindern, wird vorgeschlagen, dass zwischen Kontaktiervorrichtung und Klemme eine an die Geometrie der Klemme angepasste und als Klemmkraftverteiler wirkende Isolierung vorgesehen ist. Durch die formschlüssige Verbindung sowohl zu den in der Aufnahme angeordneten Kontaktlaschen als auch zur Klemme kann eine gleichmäßige Kraftverteilung auf die Kontaktlaschen ausbildende Kontaktiervorrichtung erzielt werden. Die Isolierung ist lösbar mit dem Grundkörper verbunden und umschließt diesen wenigstens teilweise. In einer besonders einfach zusammenzubauenden Ausführungsform der erfindungsgemäßen Vorrichtung kann die Isolierung zwei Isoliereinheiten ausbilden, die jeweils auf einer Seite des Grundkörpers zwischen der die Kontaktlaschen ausbildenden Kontaktiervorrichtung und der Klemme angeordnet sind.

Damit ein Auslösen unterschiedlicher Auslösevorrichtungen durch die erfindungsgemäße Vorrichtung durchgeführt werden kann, empfiehlt es sich, dass dem von dem Sicherungsbolzen gesicherten Hebel eine Druckfeder zur unterstützten Verlagerung von der Haltestellung in eine Lösestellung zugeordnet ist. Dadurch kann der Hebel in seiner Haltestellung nicht nur einer beispielsweise durch eine Wickelung verursachten Zugkraft entgegenwirken, sondern auch aktiv eine Druckkraft ausüben. Bei entsprechender Ausgestaltung des Last- und Kraftarms des Hebels können verhältnismäßig große Kräfte ausgeübt oder zurückgehalten werden, sodass die erfindungsgemäße Vorrichtung auch ohne eine zwischengeschaltete Auslösevorrichtung großen Kräften entgegenwirken oder abzukoppelnde Elemente freigeben kann.

Zur Verhinderung von Kerbwirkungen im Schmelzdraht und zur einfachen Kontaktierung kann die eine Anschlussaufnahme für einen elektrischen Anschluss umfassende Kontaktlasche einer erfindungsgemäßen Vorrichtung eine zwei Schenkel aufweisende Schmelzdrahtaufnahme ausbilden, die zwischen einer Assemblierungslage und einer Einbaulage verbiegbar ist, wobei die Schmelzdrahtaufnahme an der zwischen den Schenkeln angeordneten Biegestelle von einem Ausfädelloch durchsetzt ist. In der Assemblierungslage sind die Schenkel der Schmelzdrahtaufnahme gespreizt, sodass ein müheloses Einfügen des Schmelzdrahtes durchgeführt werden kann. Durch ein anschließendes Zusammenbiegen der Schenkel wird der Schmelzdrahtes in der Schmelzdrahtaufnahme festgehalten. Die durch die Schenkel ausgeübte Kraft auf den Schmelzdraht ist dabei ausreichend hoch, um einen fortwährenden Sitz auch beim Einführen der Kontaktlasche in die dafür vorgesehene Aufnahme des Grundkörpers zu gewährleisten, erlaubt jedoch auch nach Einbau noch eine Justierung des Drahtes um die Sicherungsposition des vom Schmelzdraht gesicherten Sicherungsbolzen auszurichten. Hierzu weist die Kontaktlasche an der Biegestelle der Schmelzdrahtaufnahme ein zugängliches Ausfädelloch auf, durch das das Ende des Schmelzdrahtes geführt wird. Durch ein Anziehen am ausgefädelten Ende des Schmelzdrahtes kann so die Dimensionierung der Schlaufe angepasst und durch Anbringung der den Grundkörper wenigstens teilweise umschießenden Klemme fixiert werden.

In der Zeichnung ist der Erfindungsgegenstand beispielsweise dargestellt. Es zeigen
- Fig. 1: eine Explosionsansicht einer Ausführungsform der erfindungsgemäßen Vorrichtung,
- Fig. 2: eine der Fig.1 entsprechende Vorrichtung in Perspektivenansicht,
- Fig. 3: eine erfindungsgemäße Vorrichtung in Haltestellung ohne erfindungsgemäße Klemme,
- Fig. 4: eine erfindungsgemäße Vorrichtung in Lösestellung ohne erfindungsgemäße Klemme und
- Fig. 5: ein in der erfindungsgemäßen Vorrichtung eingesetztes Kontaktlaschenpaar.

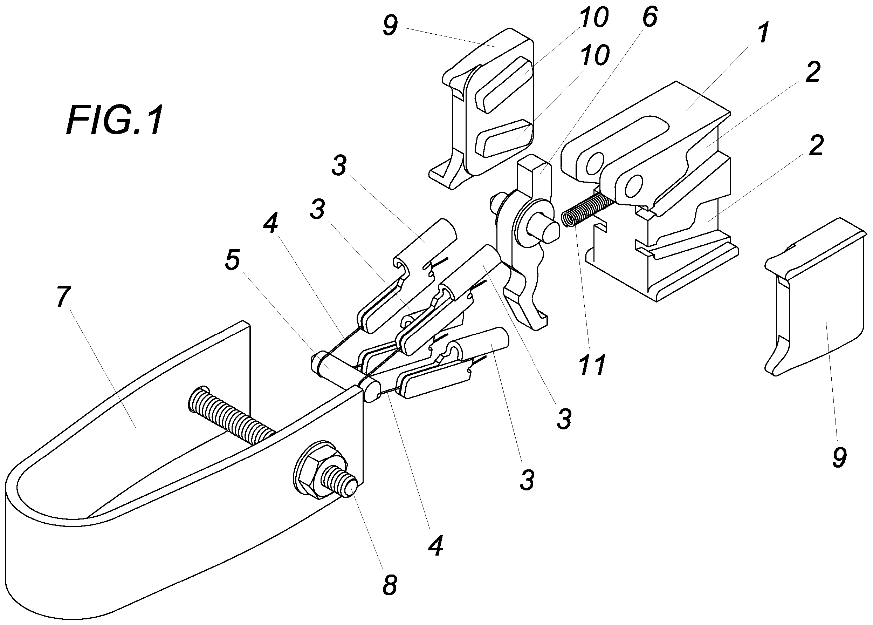

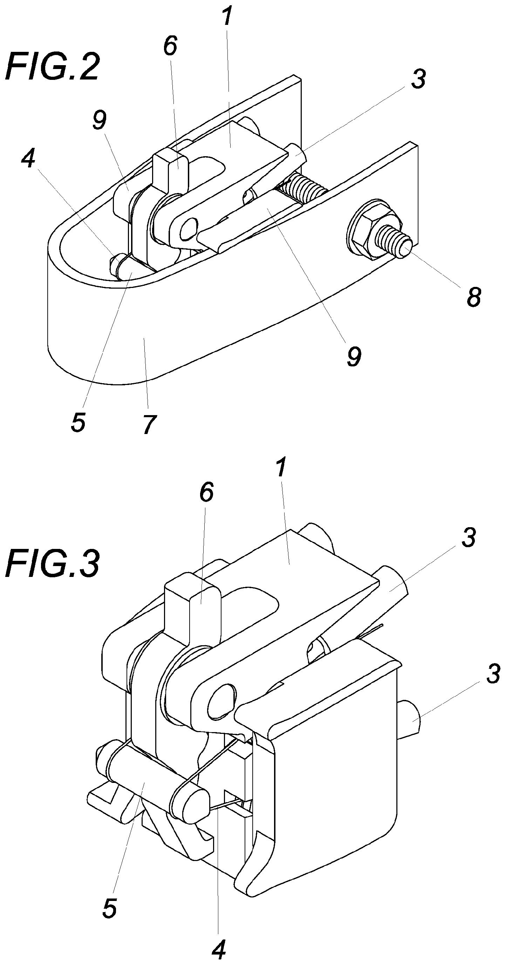

Die erfindungsgemäße Vorrichtung weist, wie in der Fig. 1 abgebildet, einen beispielsweise aus Hochleistungskunststoff, wie Polyetheretherketon, gefertigten Grundkörper 1 auf, in welchem Aufnahmen 2 für eine mehrerer Kontaktlaschen 3 ausbildende Kontaktiervorrichtung vorgesehen sind. Jeweils zwei Kontaktlaschen 3 bilden dabei ein Kontaktlaschenpaar und greifen je ein Ende eines dem Kontaktlaschenpaar zugeordneten Schmelzdrahts 4, sodass der nicht von den Kontaktlaschen 3 umschlossene Teil des Schmelzdrahts 4 eine Schlaufe bildet, die einen Sicherungsbolzen 5, aus beispielsweise Hochleistungskeramik, endseitig umschlingt. Um ein einfaches Zusammenfügen der erfindungsgemäßen Vorrichtung zu ermöglichen, sind die Kontaktlaschen 3 lösbar mit den Aufnahmen 2 verbunden, wodurch die diffizile Verbindung zwischen Schmelzdraht 4 und Kontaktlaschen 3 unabhängig vom Grundkörper 1 durchgeführt werden kann. Nach Einführen der die Schmelzdrähte 4 einklemmenden Kontaktlaschen 3 in die dafür vorgesehenen Aufnahmen 2 wird der schwenkbar gelagerte Hebel 6, der beispielsweise aus Aluminiumbronze oder anderen für den Fachmann bekannten, kaltverschweißbeständigen Materialien gefertigt sein kann, in seine Haltestellung gebracht, wonach der Sicherungsbolzen 5 durch die Schlaufen der Schmelzdrähte 4 geführt wird, sodass der Hebel 6 zwischen Grundkörper 1 Sicherungsbolzen 5 in seiner Haltestellung fixiert ist. Um einen sicheren Sitz der lösbaren Kontaktlaschen 3 und der darin angeordneten Schmelzdrähte 4 zu gewährleisten, wird abschließend eine aus beispielsweise Federstahl ausgebildete Klemme 7, wie dies beispielsweise in der Fig. 2 zu sehen ist, am Grundkörper 1 angeordnet, deren Klemmkraft durch eine Gewindeschraube 8 eingestellt werden kann. Damit ein Kurzschluss verhindert wird, ist je eine Isoliereinheit 9 zwischen Klemme 7 und den Kontaktlaschen 3 angeordnet. Die Isolierungseinheiten 9 können beispielsweise wie der Grundkörper 1 aus Polyetheretherketon (PEEK) gefertigt sein. Wie in der Fig. 1 dargestellt, weisen die Isoliereinheiten 9 als Klemmkraftverteiler wirkende Nuten 10 auf und sind zur Klemme 7 hin so ausgebildet, dass sich bei einer vorbestimmten Kraft eine formschlüssige Verbindung zwischen Klemme 7 und Isoliereinheiten 9 ergibt. Auf Grund der erfindungsgemäßen Anordnung der Klemme 7 ergibt sich ein zusätzlicher Schutz des Sicherungsbolzens 5 und des Hebels 6, wodurch ein unbeabsichtigtes durch etwaige äußere Kräfte induziertes Auslösen der Vorrichtung verhindert wird.

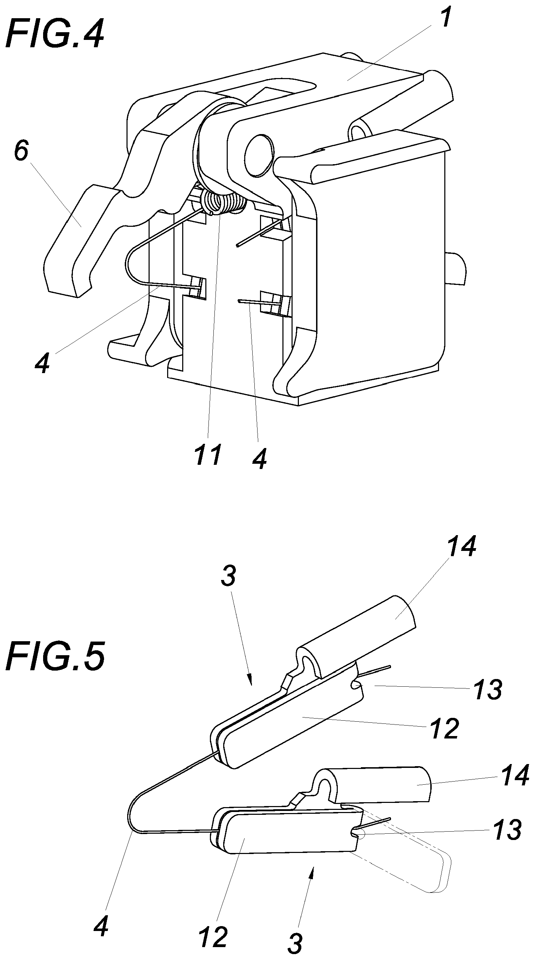

Zum Auslösen einer große Kräfte zurückhaltenden Auslösevorrichtung muss der Hebel 6 von seiner in der Fig. 3 dargestellten Haltestellung in eine in der Fig. 4 abgebildete Lösestellung übergehen. Dies geschieht durch einen von einem der Stromkreise übertragenen Stromimpuls, der zu einem Aufschmelzen des entsprechenden Schmelzdrahtes 4 führt. Sind die Schmelzdrähte 4 aus kaltgezogenem 1.4310 Edelstahl und weisen diese einen Durchmesser von etwa 0,1 mm auf, so ergibt sich ein Widerstand von ungefähr 2 Ohm. Der benötigte Stromimpuls zum sicher Durchschmelzen des Schmelzdrahtes 4 beträgt in diesem Fall 4 A über eine Dauer von 30 ms. Bei einer Stromstärke von unter 0,25 A ist ein Durchschmelzen ausgeschlossen. Als Folge des Durchschmelzens des Schmelzdrahtes 4 kann der Sicherungsbolzen 5 nicht mehr in seiner Sicherungsposition festgehalten werden, wodurch der Hebel 6 nicht mehr der beispielsweise von einer Wickelung einer aus dem Stand der Technik bekannten Auslösevorrichtung ausgeübten Kraft entgegenwirken kann und in seine Lösestellung wechselt. Um ein redundantes Auslösen zu ermöglichen sind die über jeweils einen Schmelzdraht 4 verbundenen Kontaktlaschen 3 eines Kontaktlaschenpaares jeweils mit einem eigenen Stromkreis verbunden, sodass sich für zwei Kontaktlaschenpaare zwei unabhängige Stromkreise ergeben. Dadurch wird auch eine Verlagerung des Hebels 6 von seiner Haltestellung in eine Lösestellung ermöglicht, wenn ein Kontaktlaschenpaar, oder ein Stromkreis defekt ist.

Wie in der Fig. 4 dargelegt, ist zur unterstützen Verlagerung des Hebels 6 zwischen eben jenem Hebel 6 und dem Grundkörper 1 eine Druckfeder 11 vorgesehen. Auf diese Weise kann der Hebel 6 auch Druckkräfte ausüben, wodurch sich das Spektrum der einsetzbaren Auslösevorrichtungen zur Freigabe großer Kräfte erweitert. Bei geeigneter Ausgestaltung des Last- zu Kraftarmverhältnisses kann die erfindungsgemäße Vorrichtung selbst zum Freigeben großer Kräfte eingesetzt werden, ohne dass eine weitere Auslösevorrichtung zwischengeschaltet werden muss.

Fig. 5 zeigt ein Kontaktlaschenpaar bildende Kontaktlaschen 3. Um den filigranen Fügeprozess zwischen Schmelzdraht 4 und Kontaktlaschen 3 zu vereinfachen, weisen die Kontaktlaschen 3 eine zwei Schenkel bildende Schmelzdrahtaufnahme 12 auf, die zwischen einer Assemblierungslage, in der die Schenkel voneinander abgespreizt sind, und einer Einbaulage, in der die Schenkel den Schmelzdraht 4 umschließen, verbiegbar sind. Um die von dem Schmelzdraht 4 ausgebildete Schlaufe auch nach Einfügen in den Grundkörper 1 an den Sicherungsbolzen 5 anpassen zu können, sind die Kontaktlaschen 3 an der Biegestelle zwischen den Schenkeln von einem Ausfädelloch 13 durchsetzt, sodass die ausgefädelten Enden des Schmelzdrahtes 4 frei zugänglich sind. Nach Anpassung der Schlaufe auf den Sicherungsbolzen 5 wird die nötige Klemmkraft von einer Klemme 7 aufgebracht, wodurch sowohl die Klemmlaschen 3 als auch der Schmelzdraht 4 fixiert werden. Die Kontaktierung mit einem den für das Aufschmelzen des Schmelzdrahtes benötigten Strom impuls übertragenden Stromkreis erfolgt über Anschlussaufnahmen 14. Um die Widerstandsfähigkeit der Kontaktlaschen zu erhöhen, sind diese vorzugsweise aus vernickeltem Kupfer ausgebildet.

## Patentansprüche

1. Vorrichtung zum Umsetzen eines elektrischen Signals in eine mechanische Bewegung, insbesondere zum Auslösen einer große Kräfte zurückhaltenden Auslösevorrichtung, umfassend wenigstens eine in einem Grundkörper (1) angeordnete und einen Schmelzdraht (4) klemmend greifende Kontaktiervorrichtung, wobei ein Sicherungsbolzen (5) durch den Schmelzdraht (4) in einer Sicherungsposition fixiert ist, **dadurch gekennzeichnet, dass** die auf den Schmelzdraht (4) ausgeübte Klemmkraft der Kontaktiervorrichtung über eine den Grundkörper (1) wenigstens teilweise umgreifende Klemme (7) justierbar ist.

2. Vorrichtung zum Umsetzen eines elektrischen Signals nach Anspruch 1, **dadurch gekennzeichnet, dass** ein im Grundkörper (1) schwenkbar gelagerter Hebel (6) mittels eines durch den Schmelzdraht (4) gesicherten Sicherungsbolzens (5) in einer Haltestellung fixierbar ist.

3. Vorrichtung zum Umsetzen eines elektrischen Signals nach Anspruch 1 oder 2, **dadurch gekennzeichnet, dass** die Kontaktiervorrichtung zwei aus dem Grundkörper lösbare Kontaktlaschen (3) ausbildet, die jeweils ein Ende des Schmelzdrahtes (4) klemmen, wobei der Schmelzdraht (4) den Sicherungsbolzen (5) an einem seiner Endabschnitte umschlingt.

4. Vorrichtung zum Umsetzen eines elektrischen Signals nach einem der Ansprüche 1 oder 2, **dadurch gekennzeichnet, dass** die Kontaktiervorrichtung zwei aus dem Grundkörper (1) lösbare, je zwei Kontaktlaschen (3) aufweisende, Kontaktlaschenpaare ausbildet, wobei die Kontaktlaschen (3) eines ersten Kontaktlaschenpaares jeweils ein Ende eines einen ersten Endabschnitt des Sicherungsbolzens (5) umschlingenden Schmelzdrahtes (4) klemmen, und die Kontaktlaschen (3) eines zweiten Kontaktlaschenpaares jeweils ein Ende eines einen zweiten Endabschnitt des Sicherungsbolzens (5) umschlingenden Schmelzdrahtes (4) klemmen.

5. Vorrichtung zum Umsetzen eines elektrischen Signals nach Anspruch 1 bis 4, **dadurch gekennzeichnet, dass** die durch die Klemme (7) auf den Schmelzdraht (4) ausgeübte Klemmkraft durch eine die gegenüberliegenden Klemmzungen zueinander verlagernde und miteinander verbindende Gewindeschraube (8) verstellbar ist.

6. Vorrichtung zum Umsetzen eines elektrischen Signals nach einem der Ansprüche 1 bis 5, **dadurch gekennzeichnet, dass** zwischen Kontaktiervorrichtung und Klemme (7) eine an die Geometrie der Klemme (7) angepasste und als Klemmkraftverteiler wirkende Isolierung vorgesehen ist.

7. Vorrichtung zum Umsetzen eines elektrischen Signals nach einem der Ansprüche 1 bis 6, **dadurch gekennzeichnet, dass** dem von dem Sicherungsbolzen (5) gesicherten Hebel (6) eine Druckfeder (11) zur unterstützten Verlagerung von der Haltestellung in eine Lösestellung zugeordnet ist.

8. Vorrichtung zum Umsetzen eines elektrischen Signals nach einem der Ansprüche 3 oder 4, **dadurch gekennzeichnet, dass** die Kontaktlaschen (3) eine Anschlussaufnahme (14) für einen elektrischen Anschluss und eine zwei Schenkel ausbildende Schmelzdrahtaufnahme (12) umfassen, wobei die Schmelzdrahtaufnahme (12) zwischen einer Assemblierungslage und einer Einbaulage verbiegbar ist, wobei die Schmelzdrahtaufnahme (12) an der zwischen den Schenkeln angeordneten Biegestelle von einem Ausfädelloch (13) durchsetzt ist.

## Claims

1. Device for converting an electrical signal into a mechanical movement, in particular for triggering a triggering device retaining large forces, comprising at least one contact device disposed in a base body (1) and clampingly grasping a fusible wire (4), wherein a securing bolt (5) is fixed in a securing position by the fusible wire (4), **characterised in that** the clamping force of the contact device exerted on the fusible wire (4) can be adjusted by a clamp (7) at least partially surrounding the base body (1).

2. Device for converting an electrical signal as claimed in claim 1, **characterised in that** a lever (6) pivotably mounted in the base body (1) can be fixed in a retaining position by means of a securing bolt (5) secured by the fusible wire (4).

3. Device for converting an electrical signal as claimed in claim 1 or 2, **characterised in that** the contact device forms two contact tabs (3) which can be released from the base body and each clamp an end of the fusible wire (4), wherein the fusible wire (4) is looped around the securing bolt (5) at one of its end portions.

4. Device for converting an electrical signal as claimed in any one of claims 1 or 2, **characterised in that** the contact device forms two contact tab pairs which can be released from the base body (1) and each comprise two contact tabs (3), wherein the contact tabs (3) of a first contact tab pair clamp a respective end of a fusible wire (4) looped around a first end portion of the securing bolt (5), and the contact tabs (3) of a second contact tab pair clamp a respective end of a fusible wire (4) looped around a second end portion of the securing bolt (5).

5. Device for converting an electrical signal as claimed in claims 1 to 4, **characterised in that** the clamping force exerted on the fusible wire (4) by the clamp (7) can be adjusted by a threaded screw (8) displacing the opposing clamping tongues with respect to each other and connecting them to each other.

6. Device for converting an electrical signal as claimed in any one of claims 1 to 5, **characterised in that** an insulator adapted to the geometry of the clamp (7) and acting as a clamping force distributor is provided between the contact device and the clamp (7).

7. Device for converting an electrical signal as claimed in any one of claims 1 to 6, **characterised in that** a compression spring (11) for assisted displacement from the retaining position into a release position is allocated to the lever (6) secured by the securing bolt (5).

8. Device for converting an electrical signal as claimed in any one of claims 3 or 4, **characterised in that** the contact tabs (3) comprise a connection receiver (14) for an electrical connection and a fusible wire receiver (12) forming two limbs, wherein the fusible wire receiver (12) can be bent between an assembly position and an installation position, wherein the fusible wire receiver (12) has a pull-out hole (13) passing though it at the bending point between the limbs.

## Revendications

1. Dispositif pour convertir un signal électrique en un mouvement mécanique, en particulier pour déclencher un dispositif de déclenchement retenant de grandes forces, comprenant au moins un dispositif de contact disposé dans une structure de base (1) et serrant un fil fusible (4), dans lequel un boulon de sécurité (5) est fixé par le fil fusible (4) dans une position de sécurité, **caractérisé en ce que** la force de serrage exercée par le dispositif de contact sur le fil fusible (4) est réglable au moyen d'une bride (7) entourant au moins partiellement la structure de base (1).

2. Dispositif pour convertir un signal électrique selon la revendication 1, **caractérisé en ce qu'**un levier (6) monté de façon pivotante dans la structure de base (1) peut être fixé au moyen d'un boulon de sécurité (5) sécurisé par le fil fusible (4) dans une position de retenue.

3. Dispositif pour convertir un signal électrique selon la revendication 1 ou 2, **caractérisé en ce que** le dispositif de contact forme deux lames de contact (3) détachables de la structure de base qui serrent chacune une extrémité du fil fusible (4), le fil fusible (4) enlaçant le boulon de sécurité (5) au niveau d'une de ses sections d'extrémité.

4. Dispositif pour convertir un signal électrique selon une des revendications 1 ou 2, **caractérisé en ce que** le dispositif de contact forme deux paires de lames de contact détachables de la structure de base (1) et présentant chacune deux lames de contact (3), les lames de contact (3) d'une première paire de lames de contact serrant chacune une extrémité d'un fil fusible (4) enlaçant une première section d'extrémité du boulon de sécurité (5), et les lames de contact (3) d'une deuxième paire de lames de contact serrant chacune une extrémité d'un fil fusible (4) enlaçant une deuxième section d'extrémité du boulon de sécurité (5).

5. Dispositif pour convertir un signal électrique selon une des revendications 1 à 4, **caractérisé en ce que** la force de serrage exercée par la bride (7) sur le fil fusible (4) est réglable par le biais d'une vis filetée (8) déplaçant l'une par rapport à l'autre les languettes de serrage opposées et les reliant entre elles.

6. Dispositif pour convertir un signal électrique selon une des revendications 1 à 5, **caractérisé en ce qu'**entre le dispositif de contact et la bride (7) est prévue une isolation adaptée à la géométrie de la bride (7) et faisant office de répartiteur de la force de serrage.

7. Dispositif pour convertir un signal électrique selon une des revendications 1 à 6, **caractérisé en ce qu'**au levier (6) maintenu par le boulon de sécurité (5) est associé un ressort de compression (11) pour le déplacement assisté de la position de retenue à une position de libération.

8. Dispositif pour convertir un signal électrique selon une des revendications 3 ou 4, **caractérisé en ce que** les lames de contact (3) comprennent un réceptacle de raccord (14) pour le raccord électrique et un réceptacle de fil fusible (12) formant deux bras, le réceptacle de fil fusible (12) pouvant être courbé entre une position d'assemblage et une position de montage, le réceptacle de fil fusible (12) étant traversé au point de courbure situé entre les bras par un trou d'extraction (13).
